Europäisches Patentamt

European Patent Office

Office européen des brevets

(19)

(11) Numéro de publication : **0 180 521**
**B1**

(12) # FASCICULE DE BREVET EUROPÉEN

(45) Date de publication du fascicule du brevet :
11.01.89

(51) Int. Cl.⁴ : **F 16 L 37/00**, B 64 D 1/06,
**F 41 F 5/02**

(21) Numéro de dépôt : **85402087.2**

(22) Date de dépôt : **30.10.85**

(54) **Connecteur de sécurité pour élément séparable ou largable avec dispositif de rétraction automatique.**

(30) Priorité : **31.10.84 FR 8416677**

(43) Date de publication de la demande :
**07.05.86 Bulletin 86/19**

(45) Mention de la délivrance du brevet :
**11.01.89 Bulletin 89/02**

(84) Etats contractants désignés :
**DE GB IT NL**

(56) Documents cités :
**WO--A--82 /025 27**
**GB--A-- 2 084 277**
**US--A-- 3 756 545**

(73) Titulaire : **R. ALKAN & Cie.**
**Rue du 8 mai 1945**
**F-94460 Valenton (FR)**

(72) Inventeur : **Coutin, Pierre**
**117, avenue Général Michel Bizot**
**F-75012 Paris (FR)**

(74) Mandataire : **Hud, Robert**
**Cabinet COLLIGNON 6, rue de Madrid**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 180 521 B1

**Description**

La présente invention s'applique principalement dans le domaine aérospatial, mais elle peut être employée plus généralement chaque fois qu'il est nécessaire de connecter manuellement bout à bout deux éléments de conduite électrique ou de fluide, l'un sur un corps principal, par exemple un aéronef, et l'autre sur un appareil ou une charge qui est séparable ou largable. De tels besoins se rencontrent aussi dans des applications maritimes ou nucléaires.

Un connecteur selon l'invention est un perfectionnement d'un système, tel par exemple que celui commercialisé par la Société Compagnie Deutsch sous la dénomination DBAS, couramment utilisé pour des connecteurs électriques qui comprennent deux éléments séparables dont l'un, qui est relié à un corps principal par un élément souple de conduite, porte une bague mobile de verrouillage que l'on éloigne de l'autre élément séparable pour réaliser la déconnexion tandis qu'un ressort tend à ramener la bague vers cet autre élément pour verrouiller celui-ci au premier élément séparable. Le contrôle de la connexion résulte de l'apparition d'un cercle coloré qui se trouve recouvert par la bague tant que celle-ci est écartée de la position de verrouillage.

L'invention a pour but de réaliser un connecteur qui utilise un tel système sans modifier ses pièces essentielles de verrouillage, car celles-ci bénéficient d'une bonne mise au point mais en leur adjoignant une pièce accessoire associée à la bague mobile de façon à pouvoir l'entraîner pour la déconnexion après une longue course morte inactive de cette pièce accessoire tel qu'exposé dans la revendication 1.

La pièce accessoire selon la présente invention peut notamment être établie de façon à obtenir les avantages ci-après :

a) elle protège la bague de verrouillage ;

b) elle est accessible et manipulable sur une grande longueur avec une meilleure prise pour les doigts de l'opérateur ;

c) sa course morte empêche tout déverrouillage intempestif lors d'un déplacement moindre que cette course morte ;

d) elle entraîne la bague de déverrouillage en fin de cette course morte pour assurer le déverrouillage ;

e) elle appuie au contraire sur la bague pour assurer le verrouillage de la connexion.

Une forme d'exécution particulière de l'invention la rend spécialement avantageuse pour son emploi en vue d'alimenter une charge largable à distance, à partir par exemple d'un avion pour une charge emportée sous cet avion. Dans un tel cas, il est connu d'équiper la bague de verrouillage d'un fil de traction rattaché à l'avion et généralement double pour l'obtention d'une traction symétrique de la bague lorsque la charge est larguée, ce fil produisant alors automatiquement le glissement relatif de la bague par rapport au connecteur et consécutivement la séparation des deux éléments de ce connecteur.

L'utilisation de la pièce accessoire selon l'invention comporte dans ce cas l'accrochage du fil de traction à cette pièce accessoire et non plus directement à la bague de verrouillage, ce qui donne une plus grande latitude dans la mise en place et dans le réglage de ce fil dont on peut vérifier le bon parcours dans les structures par de légères tractions sans risquer un déverrouillage intempestif grâce à la course inactive de la pièce accessoire avant son action sur la bague de verrouillage.

Dans une telle application de l'invention, on cherche en outre à mettre en œuvre un dispositif de relevage de l'élément lié à l'avion après déverrouillage de façon que cet élément ne pende pas au bout de sa conduite souple, mais soit au contraire « ravalé » c'est-à-dire remonté jusqu'à l'intérieur de la structure en lui évitant de se balancer et de provoquer des détériorations. L'invention permet d'effectuer ce ravalage par le même fil de déverrouillage attaché à la pièce accessoire avec beaucoup de sécurité et une grande facilité de mise en place. En effet, le dispositif de ravalage comporte couramment un tirant ou un treuil de rappel du fil rappelé par un ressort dans le sens du ravalage et portant une série de rochets retenus par un cliquet éclipsable. Dans ce cas, la course morte de la pièce accessoire doit avantageusement se trouver plus longue que le pas entre deux rochets consécutifs. De ce fait, l'opération de connexion permet un retour de cette pièce accessoire selon un déplacement inférieur ou égal au pas des rochets. Il n'y a alors, et sans précaution particulière de l'opérateur, aucune tension directe sur la bague de verrouillage, donc aucune possibilité de déverrouillage intempestif.

Pour bien faire comprendre l'invention, on en décrira ci-après un exemple d'exécution en référence au dessin schématique annexé, dans lequel :

la figure 1 est une vue en élévation du connecteur avec coupe axiale de la bague mobile et de la pièce accessoire représentée sur la moitié de gauche de la figure dans la position avancée de verrouillage et sur la moitié de droite dans une position d'un recul insuffisant pour provoquer le déverrouillage ;

la figure 2 est une vue en plan du connecteur ;

la figure 3 est une coupe partielle selon la ligne III-III de la figure 1 ; et

la figure 4 est une vue d'ensemble avec arrachement partiel du connecteur relié au dispositif de ravalage.

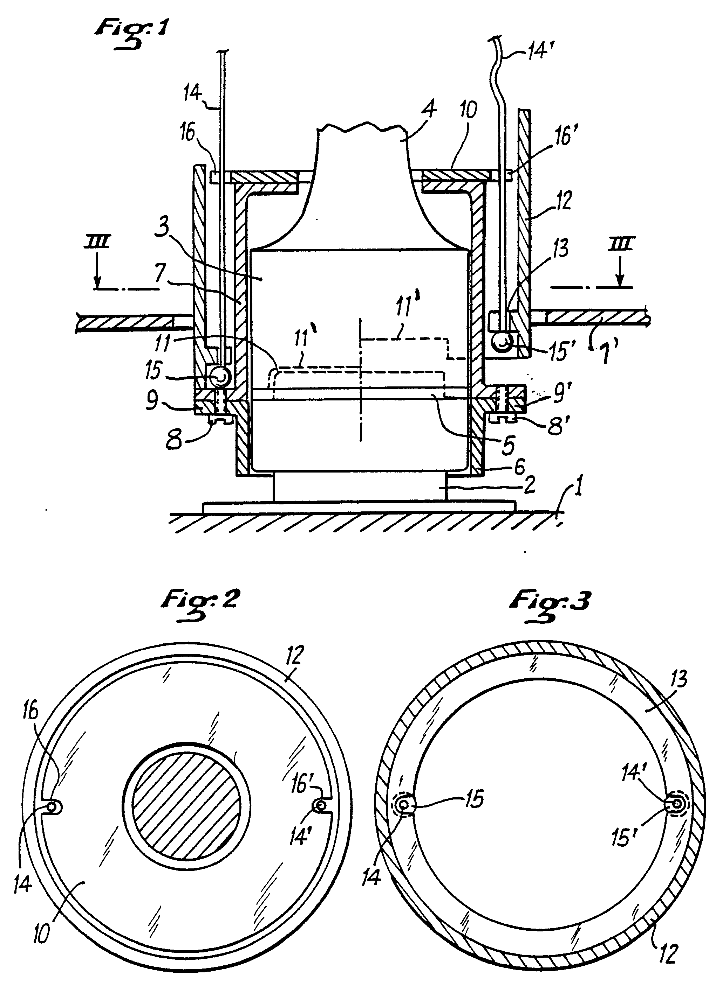

Sur la figure 1, on a indiqué en 1 la paroi supérieure de la charge largable portant en 2 l'élément de connecteur fixé à cette charge. On a indiqué en 3 l'autre élément du connecteur, séparable de l'élément 2 ; cet élément 3 prolonge le câble 4 qui enferme les conduits à connecter et il porte en 5 un cercle coloré témoin de verrouillage qui apparaît au-dessus de la bague de verrouillage 6 lorsque celle-ci, enfoncée vers l'élément 2, est en position du verrouillage de l'élément 3 sur l'élément 2.

Conformément à l'invention, on fixe sur la bague 6 une douille 7, par exemple au moyen de vis 8, 8' qui traversent des oreilles 9-9' de la bague, ces oreilles existant déjà dans des connecteurs connus pour accrocher les brins d'un fil de déconnexion. Les vis 8, 8' coopèrent avec des trous taraudés dans des oreilles correspondantes de la douille 7. Cette douille est guidée avec un certain jeu le long de l'élément 3 du connecteur. Elle comporte un élargissement 10 par lequel agit la commande de déverrouillage et qui est établi soit par deux oreilles soit, comme représenté, par un fond plat. La douille 7 présente de plus des échancrures latérales 11 pour permettre de voir le cercle 5 témoin de verrouillage.

Une lanterne coulissante 12, concentrique au connecteur, comporte un manchon interne 13, qui peut se réduire à des oreilles internes, avec faible jeu autour de la douille 7 de sorte que cette lanterne peut coulisser entre les oreilles de la douille 7 et l'élargissement 10 jusqu'à ce que le manchon 13 vienne buter contre cet élargissement. Cette lanterne 12 présente aussi des échancrures 11' en face des échancrures 11 de la douille 7 pour permettre de voir le cercle témoin 5.

On a représenté par la référence 1' la paroi du corps principal, par exemple un support fixé sous l'aile d'un avion. On voit clairement que le verrouillage peut être mis en œuvre non seulement par une poussée sur la bague 6 dans le petit espace entre cette paroi 1' et la paroi 1 de la charge, comme dans le connecteur ancien, mais aussi, grâce à l'invention, par l'intérieur du support au-dessus de la paroi 1', où existent de larges portes de visite.

Dans l'exemple d'exécution représenté, le manchon 13 comporte des fentes diamétralement opposées où passent les extrémités inférieures des deux brins 14, 14' du fil de déverrouillage. Des boules 15, 15' soudées en bout de ces brins occupent sensiblement l'intervalle radial entre la douille 7 et la lanterne 12, ce qui les maintient en position dans l'ensemble. Deux fentes diamétralement opposées 16, 16' sont ménagées dans l'élargissement 10 de la douille, ce qui aligne la douille et la lanterne 12 par l'intermédiaire des brins 14, 14' qui traversent ces fentes 16, 16'.

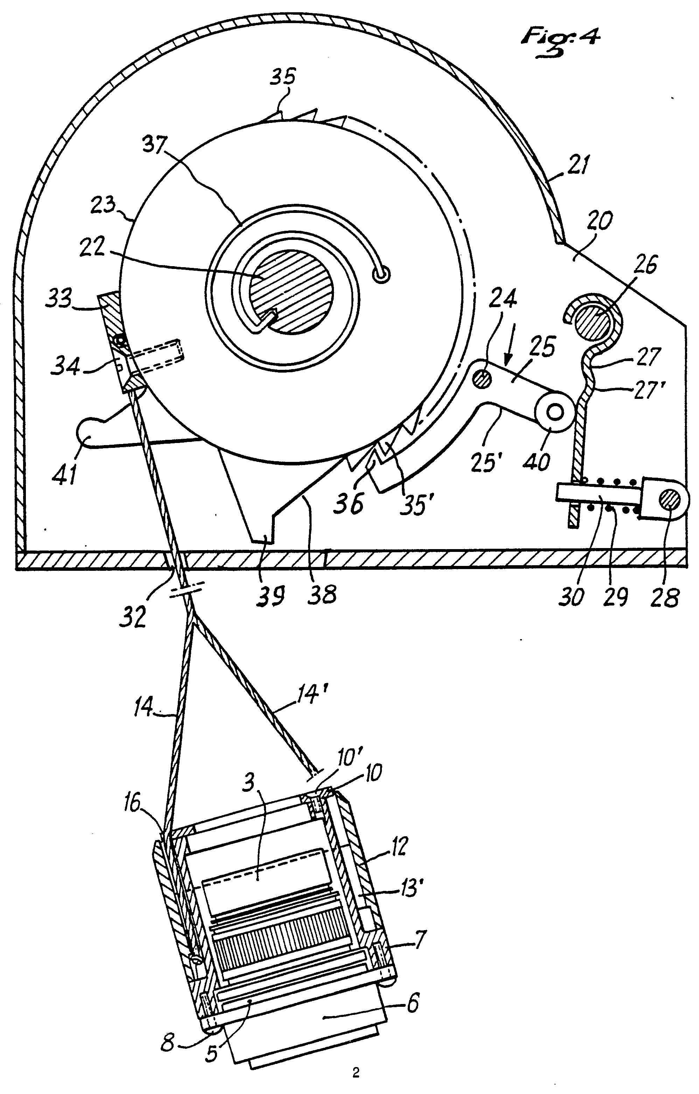

Une poussée sur la lanterne 12 vers le bas de la figure 1 a pour effet d'appuyer sur la douille 7 et la bague 6, ce qui enfiche et verrouille l'élément 3 sur l'élément 2 en faisant apparaître le cercle 5 à travers les échancrures 11 et 11' comme on l'a représenté sur la figure 1. Lorsqu'on relâche cette poussée, l'organe de rappel, dit de « ravalage » qui tire vers le haut de la figure 1 sur les brins 14, 14' remonte ces brins et par suite la lanterne 12 jusqu'à l'action d'arrêt du rochet le plus proche porté par l'organe de rappel qu'on décrira ci-après en référence à la figure 4. La lanterne 12 occupe alors la position représentée sur la moitié droite de la figure 1 et n'a plus aucune action sur le connecteur du fait du jeu longitudinal important qui subsiste entre le manchon et l'élargissement 10.

Les brins 14, 14' du fil de déverrouillage et de ravalage peuvent être réunis en un seul, à peu de distance du connecteur comme le montre la figure 4. Les guidages assez longs du dispositif, tant entre l'élément 3 du connecteur et la douille 7 qu'entre cette dernière et la lanterne 12, font qu'aucun coincement n'est à craindre même dans le cas où un seul des deux brins 14 ou 14' assurerait le déverrouillage. Cela est un facteur de sécurité important, alors que précédemment la traction de la bague 6 employée seule nécessitait un bon équilibrage des tensions des deux brins. Sur la figure 1, on a représenté le brin 14 tendu et le brin 14' lâche sans tension.

Ces brins 14, 14' ou bien un fil qui les prolonge sont avantageusement rappelés dans le corps principal, par exemple dans une structure fixée à un aéronef, au moyen d'une pièce mobile à laquelle ils sont reliés, elle-même rappelée par un ressort pour exercer une traction sur les brins. Cette pièce porte une série de rochets équidistants retenus par un cliquet pivotant sur un carter fixe et elle est caractérisée en ce que le pas des rochets détermine un mouvement de longueur moindre que la course de coulissement de la lanterne 12 par rapport à la douille 7. De façon avantageuse, ladite pièce mobile porte une butée correspondant à un tirage maximal des brins et précédée d'une rampe de dégagement du cliquet d'avec les rochets et de mise de ce cliquet en position inactive. De la sorte, au moment du largage d'une charge, la traction du fil correspondant à ce tirage maximal vient dégager le cliquet, ce qui libère la pièce mobile et permet au ressort d'effectuer le « ravalage » désiré de façon séquentielle et automatique. Une autre butée portée par ladite pièce mobile peut, en fin de ravalage, remettre le cliquet en position active, ce qui permet une nouvelle utilisation du système de connexion sans intervention d'un opérateur sur la pièce mobile de ravalage.

La figure 4 montre en coupe un dispositif pour appliquer le procédé dans le cas où la pièce mobile de ravalage effectue un mouvement circulaire en formant ainsi un treuil pouvant tourner d'environ un demi-tour. Ce dispositif, fixé à la structure précitée, est porté par une paroi épaisse plane 20 formant le fond d'un boîtier qui comporte une enveloppe périphérique 21 soudée au fond 20 et ce fond porte quatre axes fixes 22, 24, 26 et 28 ; l'axe 22 supporte le treuil 23, l'axe 24 est celui sur lequel s'articule le cliquet 25, l'axe 26 sert l'axe de pivotement d'une came de retenue 27 destinée à agir sur le cliquet 25 et l'axe 28 sert d'appui à un ressort de rappel 29 guidé par un doigt 30 qui est articulé sur cet axe et traverse l'extrémité libre de la came soumise à l'action du ressort 29.

Le treuil 23 comprend de façon habituelle une portion cylindrique sur laquelle on a fixé une extrémité du fil de déverrouillage ou bien les deux extrémités des deux brins 14, 14'. Dans l'exemple représenté, le fil traverse une plaque 31 par un orifice de guidage 32. D'une façon connue, le fil s'enroule sur un tour mort, autour de la portion cylindrique ; on n'a pas représenté ce tour mort sur la figure 4 qui montre la fixation du fil dans une encoche d'une plaquette 33 appuyée contre la portion cylindrique au moyen d'une vis 34 vissée dans le treuil 23.

Entre le fond 20 et sa portion cylindrique, le treuil 23 porte une série de dents, dites rochets, tels que 35 et qui sont susceptibles d'être retenus par le crochet 36 qui termine le cliquet 25. Selon l'invention, la distance entre deux rochets consécutifs détermine un arc d'enroulement du fil dont la longueur est moindre que la course morte de la pièce accessoire du connecteur à laquelle ce fil est relié, c'est-à-dire de la lanterne 12. Dans l'exemple de la figure 1, les rochets sont à une distance de l'axe 22 presque identique au rayon de la portion cylindrique du treuil 23 et il convient que la distance entre deux rochets soit moindre que la course morte de la lanterne 12.

Le dispositif représenté comprend en outre un moyen de réenroulement automatique du fil en fin de course après déverrouillage, ce qui assure le « ravalage » automatique de l'élément 3 du connecteur. A cet effet, un ressort spiral ou hélicoïdal 37, interposé entre l'axe fixe 22 et le treuil 23, tend à faire tourner celui-ci dans le sens de l'enroulement du fil 14. D'autre part, le treuil tournant porte, après la série de rochets et dans le même plan transversal, une rampe 38 terminée par une butée 39 de telle façon que la fin de la traction du fil 14 engage le crochet 36 sur la rampe 38 en l'écartant de la distance d'action des rochets jusqu'à ce que la butée 39 atteigne le cliquet 25. Cette butée provoque une forte traction sur le fil, ce qui assure le déverrouillage du connecteur et, de ce fait, la traction redevient très faible, le poids de la conduite souple 4 étant minime. Après déverrouillage, le ressort 37 provoque l'enroulement du fil et le ravalage de la conduite tant que le cliquet 25 n'est pas revenu en position d'action contre les rochets 35. Pour éviter une action prématurée du cliquet avant la fin du ravalage, le cliquet est retenu par la came 27 dont un bossage 27' maintient un galet 40 porté par une queue 25' du cliquet pour conserver à ce dernier la position écartée de ravalage.

Pour remettre l'ensemble en position active, dans laquelle le cliquet coopère avec les rochets 35, sans intervention extérieure, le treuil 23 porte une butée de retour 41 dans le même plan transversal que les rochets 35 et que le cliquet 25, de façon qu'en fin de ravalage la butée 41 vienne buter contre la queue 25' du cliquet selon la flèche F. Le choc dégage le galet 40 du bossage 27' et le cliquet revient ainsi en appui actif sur le treuil 23.

La figure 4 représente aussi, en bout des brins 14, 14', une coupe de l'élément séparable 3 du connecteur mais on n'a pas représenté la conduite souple 4. A l'extrémité supérieure de droite de la douille 7 on a représenté sur cette figure 4 et ramené dans le plan de celle-ci un mode de fixation de l'élargissement 10 sur la douille 7 au moyen de vis telles que 10'. Une telle fixation démontable de l'élargissement 10 est évitée si celui-ci et le manchon 13 sont réduits à des oreilles discontinues. La lanterne 12 s'emmanche alors sur la douille 7 par un simple décalage desdites oreilles suivi d'une remise en alignement. La figure 4 représente les diverses pièces en fin de verrouillage du connecteur, les brins 14 et 14' étant tendus par le ressort 37 et la lanterne 12 en butée sur la douille 7 qui découvre à la vue le cercle coloré 5 de sorte que, lorsqu'on relâchera la lanterne 12, elle sera remontée d'une hauteur égale au jeu figurant entre le crochet 36 et le rochet le plus proche 35'.

## Revendications

1. Connecteur entre deux extrémités de conduite, du type qui comporte un premier élément (3) avec une bague mobile (6) que l'on éloigne d'un deuxième élément (2) pour permettre une déconnexion entre eux, et une pièce accessoire à longue course (12) qui entraîne la bague mobile pour permettre la déconnexion après une course morte inactive de ladite pièce accessoire, caractérisé en ce que la bague mobile (6) est prolongée d'une douille (7) dont la longueur détermine la course morte inactive de la pièce accessoire (12), ladite douille (7) entourant le premier élément (3) en étant guidée par lui et comportant un élargissement (10), et en ce que la pièce accessoire (12) entoure ladite douille (7) et comporte un manchon interne (13) qui entraîne la douille (7) et la bague mobile (6) pour permettre la déconnexion.

2. Connecteur selon la revendication 1, caractérisé en ce que la pièce accessoire (12) est guidée sur la douille (7) au moyen de l'élargissement (10) de cette douille et du manchon (13) de ladite pièce accessoire.

3. Connecteur selon la revendication 1 ou la revendication 2, caractérisé en ce que la pièce accessoire (12) peut appuyer sur des oreilles (9, 9') de la bague mobile pour verrouiller entre eux les deux éléments à connecter.

4. Connecteur selon l'une quelconque des revendications précédentes, caractérisé en ce que la douille (7) comporte des échancrures (11) permettant de voir le premier élément (3).

5. Connecteur selon l'une quelconque des revendications précédentes, caractérisé par un fil de traction (14) relié à la pièce accessoire (12) pour permettre une déconnexion à distance.

6. Connecteur selon la revendication 5, caractérisé en ce que le fil (14) traverse le manchon interne (13) de la pièce accessoire (12).

7. Connecteur selon la revendication 5 ou la revendication 6, caractérisé en ce que le fil (14-14') traverse l'élargissement de la douille par des orifices (16, 16').

8. Connecteur selon l'une quelconque des revendications 5 à 7, caractérisé en ce que le fil (14, 14') est rappelé dans un corps principal par une pièce mobile (23) soumise à un ressort de rappel (37) et retenue par un cliquet (25) agissant sur une série de rochets (35) dont le pas détermine un mouvement de rappel moindre que la course morte de la pièce accessoire (12) du connecteur.

9. Connecteur selon la revendication 8, caractérisé en ce que la fin de déroulement du fil (14, 14') écarte le cliquet (25) par une rampe (38) pour permettre le rappel complet du fil.

10. Connecteur selon la revendication 9, dans lequel le rappel complet du fil (14-14') par le ressort (37) détermine le choc d'une butée de retour (41) sur le cliquet (25) pour le remettre en position active.

11. Connecteur selon l'une quelconque des revendications 8 à 10, caractérisé en ce que la pièce mobile (23) est un treuil rotatif.

## Claims

1. Connector between two pipe ends, of the type which comprises a first element (3) with a movable ring (6) which is moved away from a second element (2) in order to allow disconnection, and a long-travel accessory part (12) which entrains the movable ring to allow disconnection after an inactive dead travel of the said accessory member, characterised in that the movable ring (6) is extended by a socket (7) the length of which determines the inactive dead travel of the accessory member (12), the said socket (7) enclosing the first element (3), being guided by it and comprising a widened out part (10) and in that the accessory member (12) surrounds the said socket (7) and comprises an inner sleeve (13) which entrains the socket (7) and the movable ring (6) in order permit of disconnection.

2. Connector according to Claim 1, characterised in that the accessory member (12) is guided on the socket (7) by means of the widened out part (10) of the socket and the sleeve (13) on the accessory member.

3. Connector according to Claim 1 or Claim 2, characterised in that the accessory member (12) can bear on lugs (9, 9') on the movable ring in order to lock together the two elements which are to be connected.

4. Connector according to any one of the preceding Claims, characterised in that the socket (7) comprises cut-outs (11) which make it possible to see the first element (3).

5. Connector according to any one of the preceding Claims, characterised by a traction thread (14) connected to the accessory member (12) to permit of remote disconnection.

6. Connector according to Claim 5, characterised in that the thread (14) passes through the inner sleeve (13) of the accessory member (12).

7. Connector according to Claim 5 or Claim 6, characterised in that the thread (14, 14') traverses orifices (16, 16') in the widened out part of the socket.

8. Connector according to any one of Claims 5 to 7, characterised in that the thread (14, 14') is retracted into a main body by a movable member (23) which is subject to the action of a restoring spring (37) and retained by a pawl (25) acting on a series of ratchets (37) the pitch of which determines a restoring movement which is less than the dead travel of the accessory member (12) of the connector.

9. Connector according to Claim 8, characterised in that when the thread (14, 14') reaches the end of its run, the pawl (25) is moved aside by a ramp (38) to allow a complete return of the thread.

10. Connector according to Claim 9, in which the complete return of the thread (14, 14') by the spring (37) determines the impact of a return stop (41) on the pawl (25) to restore it to its active position.

11. Connector according to any one of Claims 8 to 10, characterised in that the movable member (23) is a rotary winch.

## Patentansprüche

1. Verbindungsteil zwischen zwei Leitungsenden mit einem ersten Teil (3) mit einem von einem zweiten Teil (2) abrückbaren beweglichen Ring (6) und mit einem langhubigen Zusatzteil (12) welcher den beweglichen Ring so in Bewegung versetzt, daß nach einem wirkungslosen toten Gang bzw. Tothub des Zusatzteiles die Trennung möglich ist, dadurch gekennzeichnet, daß sich der bewegliche Ring (6) in einer Hülse (7) fortsetzt, deren Länge den wirkungslosen Tothub des Zusatzteiles (12) bestimmt, daß die Hülse (7) den ersten Teil (3) unter Führung durch diesen umgibt und eine Erweiterung bzw. Verbreiterung (10) aufweist, und daß der Zusatzteil (12) die Hülse (7) umschließt und einen nach innen weisenden Stutzen bzw. eine Innenmuffe (13) aufweist, welche die Hülse (7) und den beweglichen Ring (6) zur Trennung in Bewegung versetzt.

2. Verbindungsteil nach Anspruch 1, dadurch gekennzeichnet, daß der Zusatzteil (12) auf der Hülse (7) mittels der Verbreiterung (10) derselben und dem Stutzen bzw. der Muffe (13) des Zusatzteiles (12) geführt ist.

3. Verbindungsteil nach Anspruch 1 oder 2, dadurch gekennzeichnet, daß der Zusatzteil (12) auf Laschen (9, 9') des beweglichen Ringes (6) abstützbar ist, so daß die beiden miteinander zu verbindenden Enden verriegelbar sind.

4. Verbindungsteil nach einem der vorhergehenden Ansprüche, dadurch gekennzeichnet, daß die Hülse (7) zum Sichtbarmachen des ersten Teils (3) bogenförmige Ausschnitte (11) aufweist.

5. Verbindungsteil nach einem der vorhergehenden Ansprüche, dadurch gekennzeichnet, daß ein Zugseil (14) derart mit dem Zusatzteil (12) verbunden ist, daß eine Trennung über einen längeren Zwischenraum möglich ist.

6. Verbindungsteil nach Anspruch 5, dadurch gekennzeichnet, daß das Zugseil (14) durch den Stutzen bzw. die Innenmuffe (13) des Zusatzteils (12) geführt ist.

7. Verbindungsteil nach Anspruch 5 oder 6, dadurch gekennzeichnet, daß das Zugseil (14, 14') durch Öffnungen (16, 16') in der Verbreiterung (10) der Hülse (7) geführt ist.

8. Verbindungsteil nach einem der Ansprüche 6 bis 7, dadurch gekennzeichnet, daß das Zugseil (14, 14') in einem Hauptteil durch ein bewegliches Element (23) rückgespannt bzw. rückholbar ist, welches unter der Wirkung einer Rückstellfeder (37) steht und durch eine Schnappeinrichtung (25) gehalten ist, welche auf eine Reihe von Gesperrteilen (35) einwirkt, deren Ganghöhe eine Rückstellbewegung festlegt, die kleiner ist als der Tothub des Zusatzteiles (12).

9. Verbindungsteil nach Anspruch 8, dadurch gekennzeichnet, daß das Ende der Abrollbewegung des Zugseiles (14, 14') die Schnappeinrichtung (25) über eine Schrägfläche (38) so abhebt, daß das Zugseil (14, 14') vollständig rückholbar ist.

10. Verbindungsteil nach Anspruch 9, bei welchem die vollständige Rückholung des Zugseiles (14, 14') durch die Feder (37) den Anprall eines Rückstellanschlags (41) auf der Schnappeinrichtung (25) festlegt, durch welchen diese in wirksame Stellung rückführbar ist.

11. Verbindungsteil nach einem der Ansprüche 8 bis 10, dadurch gekennzeichnet, daß das bewegliche Teil (23) eine Drehhaspel ist.

EP 0 180 521 B1

Fig:1

Fig:2

Fig:3

Fig. 4